# EUROPÄISCHE PATENTSCHRIFT

(11) **EP 3 544 717 B1**
(45) Veröffentlichungstag und Bekanntmachung des Hinweises auf die Patenterteilung: **12.08.2020**
(21) Anmeldenummer: 17787404.7
(22) Anmeldetag: 23.10.2017
(51) Int. Cl.: B01D 46/24

(54) **RUNDFILTERELEMENT MIT LÄNGS GESTRECKTER QUERSCHNITTSFORM**
ROUND FILTER ELEMENT HAVING A LONGITUDINALLY EXTENDING CROSS-SECTIONAL SHAPE
ÉLÉMENT FILTRANT ROND PRÉSENTANT UNE FORME TRANSVERSALE LONGITUDINALE

(30) Priorität: 22.11.2016 DE 102016013844
(43) Veröffentlichungstag der Anmeldung: 02.10.2019
(73) Patentinhaber: Mann+Hummel GmbH, 71636 Ludwigsburg (DE)
(72) Erfinder: DONAUER, Nadine, 70736 Fellbach (DE); NEEF, Pascal, 71229 Leonberg (DE)
(74) Vertreter: Seyboth, Matthias
(86) Internationale Anmeldenummer: PCT/EP2017/076945
(87) Internationale Veröffentlichungsnummer: WO 2018/095663

(56) Entgegenhaltungen:
- DE-A1-102011 011 595
- DE-U1-202012 102 279
- US-A1- 2009 134 087
- US-A1- 2012 160 755

## Beschreibung

### Technisches Gebiet

Die Erfindung bezieht sich auf ein Rundfilterelement, insbesondere zur Gasfiltration, nach dem Oberbegriff des Anspruches 1.

### Stand der Technik

Aus der DE 10 2011 011 595 A1 ist ein Filterelement zur Luftfiltration bekannt, dessen ringförmig umlaufender Filtermediumkörper eine längs gestreckte Querschnittsform mit halbkreisförmigen Schmalseiten und konkav nach innen gerichteten Längsseiten aufweist. Der Filtermediumkörper schließt einen innen liegenden Strömungsraum ein, in den das zu reinigende Rohfluid axial eingeführt wird, anschließend wird der Filtermediumkörper radial von innen nach außen von dem Fluid durchströmt. Der Filtermediumkörper weist über seine axiale Höhe eine konstante, gleich bleibende Querschnittsform auf.

### Offenbarung der Erfindung

Der Erfindung liegt die Aufgabe zugrunde, ein Rundfilterelement mit längs gestreckter Querschnittsform mit einfachen konstruktiven Maßnahmen so auszubilden, dass bei einer hohen Filtrationsleistung eine Anpassung an unterschiedliche Einbausituationen mit geringem Änderungsaufwand realisiert werden kann.

Diese Aufgabe wird erfindungsgemäß mit den Merkmalen des Anspruches 1 gelöst. Die Unteransprüche geben zweckmäßige Weiterbildungen an.

Das erfindungsgemäße Rundfilterelement wird vorzugsweise zur Gasfiltration eingesetzt, beispielsweise für einen Luftfilter, insbesondere im Ansaugtrakt einer Brennkraftmaschine eines Fahrzeugs. Das Filterelement weist einen ringförmig geschlossenen Filtermediumkörper auf, dessen Wandung von dem zu reinigenden Fluid in Radialrichtung - bezogen auf die Filterelementlängsachse - durchströmt wird. Der Filtermediumkörper umschließt einen innen liegenden Strömungsraum, der von der Innenwand des Filtermediumkörpers begrenzt wird. Der Filtermediumkörper wird vorzugsweise radial von außen nach innen von dem zu reinigenden Fluid durchströmt, so dass die Innenwand des Filtermediumkörpers die Reinseite bildet. Es kommt aber auch eine Durchströmung des Filtermediumkörpers in Gegenrichtung, also radial von außen nach innen in Betracht.

Der Filtermediumkörper weist eine längs gestreckte Querschnittsform auf, die beispielsweise oval oder ovalisiert ausgebildet ist oder halbkreisförmige Schmalseiten und parallele Längsseiten oder halbkreisförmige Schmalseiten und konvex oder konkav gekrümmte Längsseiten besitzt. An den axial gegenüberliegenden Stirnseiten des Filtermediumkörpers ist jeweils eine Endscheibe angeordnet, die den Filtermediumkörper axial strömungsdicht verschließt. Vorteilhafterweise ist eine Endscheibe geschlossen ausgebildet und die gegenüberliegende, zweite Endscheibe ringförmig offen ausgebildet, um einen axialen Strömungsweg zwischen der Umgebung und dem Innenraum innerhalb des Filtermediumkörpers zu ermöglichen.

Der Filtermediumkörper weist eine Verwindung um seine Längsachse auf. Dementsprechend sind die gegenüberliegenden Stirnseiten des Filtermediumkörpers mit den daran angeordneten Endscheiben zueinander verdreht, wodurch eine Anpassung an unterschiedliche Bauraumgegebenheiten möglich ist. Aufgrund der nicht-rotationssymmetrischen Ausbildung des Filtermediumkörpers und der Stirnseiten des Filtermediumkörpers liegen die Stirnseiten nicht-kongruent zueinander und ermöglichen beispielsweise ein Einsetzen in ein entsprechend verformtes Filtergehäuse.

Das Verwinden des Filtermediumkörpers um die Längsachse erfolgt vorteilhafterweise gleichmäßig über die axiale Höhe des Filtermediumkörpers. Dementsprechend ist die Verwindung pro Höhenabschnitt über die gesamte Höhe des Filtermediumkörpers gleich groß.

In einer alternativen Ausführung weisen verschiedene Höhenabschnitte des Filtermediumkörpers ein unterschiedlich großes Maß an Verwindung auf, wobei gegebenenfalls ein oder mehrere Höhenabschnitte auch ohne Verwindung ausgebildet sein können.

Die gesamte Verwindung des Filtermediumkörpers um die Längsachse beträgt beispielsweise mindestens 1° oder mindestens 2° und maximal 20° oder maximal 10°. Die Verwindung liegt beispielsweise in einer Größenordnung von 3°, 4° oder 5°.

Gemäß einer weiteren zweckmäßigen Ausführung sind die gegenüberliegenden Endscheiben parallel zueinander angeordnet. Die Verwindung des Filtermediumkörpers wird in der Weise durchgeführt, dass die axial gegenüberliegenden Stirnseiten und die daran angeordneten Endscheiben nur eine Relativverdrehung um die Längsachse zueinander erfahren, darüber hinaus aber keine weitere Kipp- oder Schwenkbewegung.

Gemäß noch einer weiteren zweckmäßigen Ausführung ist in das Filterelement ein Stützgitter integriert, welches vorzugsweise aus Kunststoff gefertigt ist. Das Stützgitter befindet sich vorzugsweise an der Innenwand des Filtermediumkörpers und kleidet den Innenraum, welcher vom Filtermediumkörper eingeschlossen wird, aus. Das Stützgitter trägt zur Stabilisierung des Filtermediumkörpers bei. Vorteilhafterweise ist auch das Stützgitter mit der gleichen Verwindung wie der Filtermediumkörper versehen. Das Stützgitter gewährleistet zudem, dass die Verwindung des Filtermediumkörpers dauerhaft beibehalten wird. Die Herstellung der Verwindung des Filtermediumkörpers erfolgt beispielsweise direkt durch ein Spritzgussverfahren, insbesondere mit einem Thermoplasten, oder beispielsweise dadurch, dass das Stützgitter durch Erwärmen in einen plastischen Zustand überführt wird, anschließend das Verwinden des Filtermediumkörpers und des Stützgitters durchgeführt wird und der Filtermediumkörper im verwundenen Zustand so lange stabilisiert wird, bis das Stützgittermaterial erkaltet und ausgehärtet ist.

In jedem Fall ist es zweckmäßig, dass der Filtermediumkörper die Verwindung dauerhaft beibehält. Dies erfolgt wie vorbeschrieben vorzugsweise über ein ebenfalls verwundenes Stützgitter, kann gegebenenfalls aber auch anderweitig herbeigeführt werden, beispielsweise durch einzelne Stützstreben oder durch Leimraupen an der Innen- oder Außenseite des Filtermediumkörpers oder dergleichen.

Gemäß noch einer weiteren zweckmäßigen Ausführung weist der Filtermediumkörper eine sich in Achsrichtung verjüngende Querschnittsform auf, so dass der Außenumfang des Filtermediumkörpers im Bereich einer Stirnseite mit daran angeordneter Endscheibe unterschiedlich groß ist im Vergleich zum Außenumfang im Bereich der gegenüberliegenden Stirnseite mit daran angeordneter Endscheibe. Die Verjüngung erfolgt vorzugsweise gleichmäßig über die axiale Höhe des Filtermediumkörpers, so dass der Filtermediumkörper konisch ausgebildet ist.

Gemäß einer vorteilhaften Ausführung ist der Filtermediumkörper maximal so weit um seine Längsachse verwunden, dass die Außenkontur der kleineren Endscheibe innerhalb der Einhüllenden der größeren Endscheibe liegt. Dementsprechend liegt die kleinere Endscheibe in der Projektion auf die größere Endscheibe innerhalb der Außenkontur der größeren Endscheibe. Bei einem stark konisch verlaufenden Filtermediumkörper erlaubt diese Ausführung größere Verdrehwinkel zwischen den Endscheiben als bei weniger stark konisch ausgebildeten Filtermediumkörpern.

In einer alternativen Ausführung sind aber auch größere Verdrehwinkel zwischen den Stirnseiten bzw. Endscheiben möglich, so dass die Außenkontur der kleineren Endscheibe abschnittsweise außerhalb der Einhüllenden der größeren Endscheibe liegt.

Gemäß noch einer weiteren zweckmäßigen Ausführung sind die kleinere Endscheibe geschlossen und die größere Endscheibe offen ausgebildet. Über die offene, größere Endscheibe erfolgt der Fluidstrom zwischen der Umgebung und dem Innenraum innerhalb des Filtermediumkörpers.

Gemäß noch einer weiteren zweckmäßigen Ausführung ist die Breite der Querschnittsform des Filtermediumkörpers im Bereich der größeren Stirnseite um mindestens 25 % größer als die Breite der Querschnittsform im Bereich der kleineren Stirnseite. Des Weiteren kann es zweckmäßig sein, dass die axiale Höhe des Filtermediumkörpers mindestens doppelt so groß ist wie die Breite der Querschnittsform des Filtermediumkörpers im Bereich der kleineren Stirnseite oder gegebenenfalls auch im Bereich der größeren Stirnseite. Gemäß noch einer weiteren vorteilhaften Ausführung beträgt die Länge der Querschnittsform des Filtermediumkörpers mindestens das Dreifache der Breite der Querschnittsform des Filtermediumkörpers.

Gemäß noch einer weiteren zweckmäßigen Ausführung besitzen die gegenüberliegenden Stirnseiten sowie die Endscheiben an den Stirnseiten die gleiche Querschnittsform, wobei im Fall eines sich über die axiale Höhe verjüngenden Querschnittes der Flächeninhalt zwar unterschiedlich groß ist, die Querschnittsformen aber den gleichen Aufbau aufweisen.

Die Erfindung bezieht sich des Weiteren auf eine Filtereinrichtung mit einem vorbeschriebenen Filterelement und mit einem Filtergehäuse zur Aufnahme des Filterelementes.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Ansicht auf die kleinere Stirnseite eines Filterelementes mit einem sich axial verjüngenden Filtermediumkörper, wobei die gegenüberliegenden Stirnseiten zueinander verdreht ausgebildet sind,
- Fig. 2: eine Ansicht auf die gegenüberliegende Stirnseite des Filterelementes nach Fig. 1,
- Fig. 3: Seitenansicht des Filterelementes.

In den Figuren sind gleiche Bauteile mit gleichen Bezugszeichen versehen.

### Ausführungsform(en) der Erfindung

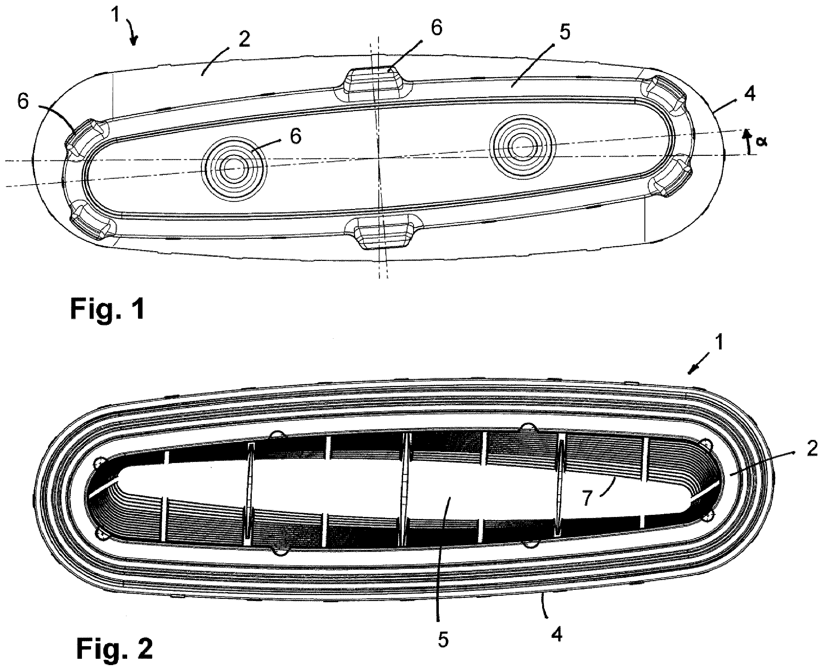

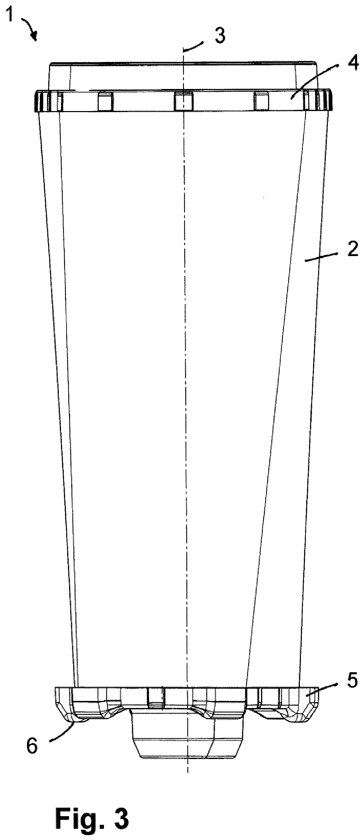

Die Fig. 1 bis 3 zeigen jeweils ein Rundfilterelement 1 eines Luftfilters, der zur Filtration der einer Brennkraftmaschine zuzuführenden Verbrennungsluft einsetzbar ist. Das Rundfilterelement 1 weist einen umlaufend geschlossenen Filtermediumkörper 2 aus einem Filtermaterial auf, beispielsweise einem gefalteten Filterpapier, und schließt radial einen Innenraum ein, durch den die gereinigte Reinluft axial abgeführt wird. Bezogen auf die Längsachse 3 (Fig. 3) erfolgt die Durchströmung der Wandung des Filtermediumkörpers 2 radial von außen nach innen.

Das Filterelement 1 und der Filtermediumkörper 2 weisen eine längs gestreckte Querschnittsform auf. Die Schmalseiten sind zumindest annähernd halbkreisförmig ausgebildet, die Längsseiten sind geringfügig konvex nach außen gekrümmt. Die Länge der Querschnittsform - Länge über alles von der Außenseite einer Schmalseite zur Außenseite der gegenüberliegenden Schmalseite - ist signifikant größer als die senkrecht hierzu verlaufende Breite und beträgt beispielsweise mindestens das Dreifache der Breite.

Über die axiale Höhe verjüngt sich die Querschnittsfläche des Filtermediumkörpers 2. Dementsprechend weist die obere Stirnseite des Filtermediumkörpers 2 eine größere Querschnittsfläche auf als die untere Stirnseite bei gleicher Querschnittsform. An jeder Stirnseite befindet sich eine Endscheibe 4 bzw. 5, welche insbesondere aus einem Dichtungsmaterial besteht und den Filtermediumkörper an der betreffenden Stirnseite axial abdichtet. Die Endscheiben 4 und 5 sind beispielsweise mit dem Filtermaterial des Filtermediumkörpers verklebt oder vergossen und bilden hierdurch eine feste Verbindung mit dem Filtermediumkörper 2.

Die obere, größere Endscheibe 4 ist ringförmig ausgebildet und deckt nur die Stirnseite des Filtermediumkörpers 2 ab, es bleibt jedoch eine innen liegende Öffnung frei, über die der vom Filtermediumkörper 2 umschlossene Innenraum zugänglich ist. Dies ermöglicht es, über die obere Endscheibe 4 die ungereinigte Rohluft axial in den Innenraum im Filtermediumkörper 2 einzuleiten.

Die untere Endscheibe 5 ist dagegen geschlossen ausgebildet und dichtet den Innenraum im Filtermediumkörper 2 axial ab. An der unteren, kleineren Endscheibe 5 sind am Außenrand sowie mittig verschiedene Stütznocken 6 angeformt, mit der sich das Filterelement 1 innerhalb eines aufnehmenden Filtergehäuses einer Filtereinrichtung an der Innenwand und am Boden des Filtergehäuses abstützt.

Über die axiale Höhe verjüngt sich die Querschnittsfläche des Filtermediumkörpers 2 gleichmäßig, so dass der Filtermediumkörper 2 eine konische Form besitzt. Die Breite der Querschnittsform des Filtermediumkörpers 2 ist im Bereich der oben liegenden, größeren Stirnseite um mindestens 25 % größer als die Breite der Querschnittsform im Bereich der unten liegenden, kleineren Stirnseite. Die axiale Höhe des Filtermediumkörpers 2 ist mindestens doppelt so groß wie die Breite der Querschnittsform des Filtermediumkörpers 2 im Bereich der kleineren Stirnseite.

Die Innenwand des Filtermediumkörpers 2, die den Innenraum begrenzt, ist von einem Stützgitter 7 ausgekleidet, das dem Filtermediumkörper 2 eine erhöhte Stabilität verleiht. Das Stützgitter 7 erstreckt sich vorteilhafterweise über die gesamte axiale Höhe und über den gesamten Umfang an der Innenseite des Filtermediumkörpers 2.

Wie Fig. 1 in Verbindung mit Fig. 2 zu entnehmen, ist der Filtermediumkörper 2 durch Verwinden um seine Längsachse 3 in der Weise verdreht, dass die axial gegenüberliegenden Stirnseiten sowie Endscheiben 4, 5 des Filtermediumkörpers 2 winkelversetzt zueinander sind. Die Endscheiben 4 und 5 besitzen grundsätzlich die gleiche Querschnittsform, sie nehmen jedoch aufgrund der konischen Verjüngung des Filtermediumkörpers 2 eine unterschiedlich große Querschnittsfläche ein. Der Verwindungswinkel ist in Fig. 1 mit α gekennzeichnet und liegt in einem Winkelbereich von mindestens 1° und maximal 20°.

Zweckmäßigerweise ist der Verwindungswinkel α maximal so groß gewählt, dass die Außenkontur der kleineren Endscheibe 4, wie in Fig. 1 dargestellt, in der Projektion auf die größere Endscheibe 4 innerhalb der Außenkontur der größeren Endscheibe 4 liegt. In einer alternativen Ausführung ist es aber auch möglich, dass der Verwindungswinkel α so groß ist, dass die Außenkontur der kleineren Endscheibe 5 abschnittsweise in der Projektion außerhalb der Außenkontur der größeren Endscheibe 4 liegt.

Die Verwindung des Filtermediumkörpers 2 erfolgt über dessen axiale Höhe gleichmäßig. Alternativ hierzu ist es auch möglich, eine nicht-gleichmäßige Verwindung über die axiale Höhe des Filtermediumkörpers 2 vorzusehen, so dass beispielsweise verschiedene axiale Abschnitte des Filtermediumkörpers 2 ohne oder mit einer geringeren Verwindung und weitere Abschnitte mit einer größeren Verwindung ausgeführt sind.

Das an der Innenseite des Filtermediumkörpers 2 angeordnete Stützgitter 7 weist die gleiche Verwindung wie der Filtermediumkörper 2 auf. Das Stützgitter 7 nimmt insbesondere die Verwindungskräfte des Filtermediumkörpers 2 auf und hält und stabilisiert den Filtermediumkörper 2 in dem verwundenen Zustand.

Die Herstellung des verwundenen Filtermediumkörpers 2 erfolgt beispielsweise dadurch, dass der Filtermediumkörper mit dem Stützgitter 7, das sich in einem weichen, plastisch verformbaren Zustand befindet, in gewünschter Weise durch Verdrehen um die Längsachse 3 in den verwundenen Zustand gebracht wird und in diesem so lange fixiert wird, bis das Stützgitter 7 ausgehärtet ist und den verwundenen Zustand dauerhaft beibehält.

## Patentansprüche

1. Rundfilterelement, insbesondere zur Gasfiltration, beispielsweise für einen Luftfilter, mit einem Filtermediumkörper (2), dessen Wandung von dem zu reinigenden Fluid bezogen auf die Längsachse (3) des Filtermediumkörpers (2) in Radialrichtung durchströmbar ist, wobei der Filtermediumkörper (2) eine längs gestreckte Querschnittsform aufweist, wobei an den axial gegenüberliegenden Stirnseiten des Filtermediumkörpers (2) jeweils eine Endscheibe (4, 5) angeordnet ist und die beiden Endscheiben (4, 5) die gleiche Querschnittsform aufweisen, **dadurch gekennzeichnet, dass** der Filtermediumkörper (2) durch Verwinden um seine Längsachse (3) in der Weise verdreht ist, dass die axial gegenüberliegenden Stirnseiten des Filtermediumkörpers (2) winkelversetzt zueinander liegen.

2. Filterelement nach Anspruch 1, **dadurch gekennzeichnet, dass** die Verwindung des Filtermediumkörpers (2) um seine Längsachse (3) mindestens 1° und maximal 20°, insbesondere maximal 10° beträgt.

3. Filterelement nach Anspruch 1 oder 2, **dadurch gekennzeichnet, dass** die gegenüberliegenden Endscheiben (4, 5) parallel zueinander angeordnet sind.

4. Filterelement nach einem der Ansprüche 1 bis 3, **dadurch gekennzeichnet, dass** sich die Querschnittsfläche des Filtermediumkörpers (2) von einer Stirnseite zur gegenüberliegenden Stirnseite hin verjüngt.

5. Filterelement nach Anspruch 4, **dadurch gekennzeichnet, dass** der Filtermediumkörper (2) maximal soweit um seine Längsachse (3) verwunden ist, dass die Außenkontur der kleineren Endscheibe (5) innerhalb der Einhüllenden der größeren Endscheibe (4) liegt.

6. Filterelement nach Anspruch 4 oder 5, **dadurch gekennzeichnet, dass** die kleinere Endscheibe (5) geschlossen und die größere Endscheibe(4) offen ausgebildet sind.

7. Filterelement nach einem der Ansprüche 4 bis 6, **dadurch gekennzeichnet, dass** die Breite der Querschnittsform des Filtermediumkörpers (2) im Bereich der größeren Stirnseite um mindestens 25 % größer ist als die Breite der Querschnittsform des Filtermediumkörpers (2) im Bereich der kleineren Stirnseite.

8. Filterelement nach einem der Ansprüche 4 bis 7, **dadurch gekennzeichnet, dass** die axiale Höhe des Filtermediumkörpers (2) mindestens doppelt so groß ist wie die Breite der Querschnittsform des Filtermediumkörpers 82) im Bereich der kleineren Stirnseite.

9. Filterelement nach einem der Ansprüche 1 bis 7, **dadurch gekennzeichnet, dass** in das Filterelement (1) ein Stützgitter (7) integriert ist, das insbesondere an der Innenwand des Filtermediumkörpers (2) angeordnet ist.

10. Filterelement nach Anspruch 8, **dadurch gekennzeichnet, dass** das Stützgitter (7) die gleiche Verwindung wie der Filtermediumkörper (2) aufweist.

11. Filterelement nach einem der Ansprüche 1 bis 9, **dadurch gekennzeichnet, dass** die Länge der Querschnittsform des Filtermediumkörpers (2) mindestens das Dreifache der Breite der Querschnittsform des Filtermediumkörpers (2) beträgt.

12. Filtereinrichtung mit einem Filterelement (1) nach einem der Ansprüche 1 bis 11 und mit einem Filtergehäuse zur Aufnahme des Filterelements (1).

## Claims

1. Round filter element, in particular for gas filtration, for example, for an air filter, with a filter medium body (2) whose wall can be flowed through by the fluid to be purified in radial direction relative to the longitudinal axis (3) of the filter medium body (2), wherein the filter medium body (2) comprises a longitudinally extending cross-sectional shape, wherein at the axially oppositely positioned end faces of the filter medium body (2) an end disk (4, 5) is arranged, respectively, and the two end disks (4, 5) comprise the same cross-sectional shape, **characterized in that** the filter medium body (2), by twisting about its longitudinal axis (3), is twisted in such a way that the axially oppositely positioned end faces of the filter medium body (2) are angularly displaced relative to each other.

2. Filter element according to claim 1, **characterized in that** the twisting of the filter medium body (2) about its longitudinal axis (3) amounts to at least 1° and maximally 20°, in particular maximally 10°.

3. Filter element according to claim 1 or 2, **characterized in that** the oppositely positioned end disks (4, 5) are arranged parallel to each other.

4. Filter element according to one of the claims 1 to 3, **characterized in that** the cross-sectional surface of the filter medium body (2) tapers from one end face toward the oppositely positioned end face.

5. Filter element according to claim 4, **characterized in that** the filter medium body (2) is twisted about its longitudinal axis (3) maximally such that the outer contour of the smaller end disk (5) is positioned within the envelope of the larger end disk (4).

6. Filter element according to claim 4 or 5, **characterized in that** the smaller end disk (5) is embodied closed and the larger end disk (4) is embodied open.

7. Filter element according to one of the claims 4 to 6, **characterized in that** the width of the cross-sectional shape of the filter medium body (2) in the region of the larger end face is larger by at least 25% than the width of the cross-sectional shape of the filter medium body (2) in the region of the smaller end face.

8. Filter element according to one of the claims 4 to 7, **characterized in that** the axial height of the filter medium body (2) is at least twice as large as the width of the cross-sectional shape of the filter medium body 82) in the region of the smaller end face.

9. Filter element according to one of the claims 1 to 7, **characterized in that** a support grid (7) is integrated in the filter element (1) and is arranged in particular at the inner wall of the filter medium body (2).

10. Filter element according to claim 8, **characterized in that** the support grid (7) comprises the same twisting as the filter medium body (2).

11. Filter element according to one of the claims 1 to 9, **characterized in that** the length of the cross-sectional shape of the filter medium body (2) amounts to at least three times the width of the cross-sectional shape of the filter medium body (2).

12. Filter device with a filter element (1) according to one of the claims 1 to 11 and with a filter housing for receiving the filter element (1).

## Revendications

1. Elément filtrant rond, en particulier pour la filtration de gaz, par exemple pour un filtre à air, avec un corps de milieu filtrant (2) dont la paroi peut être traversée par le fluide à purifier en direction radiale par rapport à l'axe longitudinal (3) du corps de milieu filtrant (2), le corps de milieu filtrant (2) présentant une forme de section transversale s'étendant longitudinalement, dans lequel un disque d'extrémité (4, 5) est respectivement disposé sur les faces frontales axialement opposées du corps de milieu filtrant (2) et les deux disques d'extrémité (4, 5) présentent la même forme en section transversale, **caractérisé en ce que** le corps de milieu filtrant (2), par torsion autour de son axe longitudinal (3), est tordu de telle manière que les faces frontales axialement opposées du corps de milieu filtrant (2) sont décalées angulairement l'une par rapport à l'autre.

2. Elément filtrant selon la revendication 1, **caractérisé en ce que** la torsion du corps de milieu filtrant (2) autour de son axe longitudinal (3) est au moins égale à 1 et au maximum à 20, en particulier au maximum à 10.

3. Elément filtrant selon la revendication 1 ou 2, **caractérisé en ce que** les disques d'extrémité (4, 5) placés en opposition sont disposés parallèlement l'un à l'autre.

4. Elément filtrant selon l'une des revendications 1 à 3, **caractérisé en ce que** la surface de section transversale du corps de milieu filtrant (2) se rétrécit d'une face d'extrémité vers la face d'extrémité opposée.

5. Elément filtrant selon la revendication 4, **caractérisé en ce que** le corps de milieu filtrant (2) est tordu au maximum autour de son axe longitudinal (3) de telle sorte que le contour extérieur du plus petit disque d'extrémité (5) est positionné à l'intérieur de l'enveloppe du plus grand disque d'extrémité (4).

6. Elément filtrant selon la revendication 4 ou 5, **caractérisé en ce que** le petit disque terminal (5) est réalisé fermé et le grand disque terminal (4) est réalisé ouvert.

7. Elément filtrant selon l'une des revendications 4 à 6, **caractérisé en ce que** la largeur de la forme de section transversale du corps de milieu filtrant (2) dans la région de la face frontale la plus grande est supérieure d'au moins 25 % à la largeur de la forme de section transversale du corps de milieu filtrant (2) dans la région de la face frontale la plus petite.

8. Elément filtrant selon l'une des revendications 4 à 7, **caractérisé en ce que** la hauteur axiale du corps de milieu filtrant (2) est au moins deux fois plus grande que la largeur de la forme de la section transversale du corps de milieu filtrant (82) dans la zone de la face frontale plus petite.

9. Elément filtrant selon l'une des revendications 1 à 7, **caractérisé en ce qu'**une grille de support (7) est intégrée dans l'élément filtrant (1) et est disposée en particulier sur la paroi intérieure du corps de milieu filtrant (2).

10. Elément filtrant selon la revendication 8, **caractérisé en ce que** la grille de support (7) comprend la même torsion que le corps du milieu filtrant (2).

11. Elément filtrant selon l'une des revendications 1 à 9, **caractérisé en ce que** la longueur de la forme de la section transversale du corps de milieu filtrant (2) est au moins trois fois plus grande que la largeur de la forme de la section transversale du corps de milieu filtrant (2).

12. Dispositif de filtrage avec un élément filtrant (1) selon l'une des revendications 1 à 11 et avec un boîtier de filtre pour recevoir l'élément filtrant (1).
